# EUROPEAN PATENT SPECIFICATION

(11) **EP 3 293 377 B1**
(45) Date of publication and mention of the grant of the patent: **04.12.2019**
(21) Application number: 17188312.7
(22) Date of filing: 29.08.2017
(51) Int. Cl.: F01N 3/20

(54) **INJECTION ARRANGEMENT FOR INJECTION OF A REDUCING AGENT INTO AN EXHAUST LINE OF A COMBUSTION ENGINE**
EINSPRITZANORDNUNG ZUM EINSPRITZEN EINES REDUKTIONSMITTELS IN EINE ABGASLEITUNG EINER BRENNKRAFTMASCHINE
AGENCEMENT D'INJECTION POUR L'INJECTION D'UN AGENT DE RÉDUCTION DANS UNE LIGNE D'ÉCHAPPEMENT D'UN MOTEUR À COMBUSTION

(30) Priority: 07.09.2016 SE 1651197
(43) Date of publication of application: 14.03.2018
(73) Proprietor: Scania CV AB, 151 87 Södertälje (SE)
(72) Inventor: ROSVALL, Esa, 151 59 Södertälje (SE)
(74) Representative: Scania CV AB

(56) References cited:
- DE-A1-102006 020 439
- US-A1- 2007 228 191
- US-A1- 2015 190 753

## Description

### BACKGROUND OF THE INVENTION AND PRIOR ART

The invention relates to an injection arrangement for injection of a reducing agent into an exhaust line of a combustion engine according the preamble of claim 1.

One way of reducing emissions of nitrogen oxides from diesel engines is to use a technique called SCR (selective catalytic reduction). This involves a reducing agent in the form of a urea solution being supplied in a specific dose to the exhaust gases in the exhaust passage of a diesel engine. When the urea solution is sprayed into the exhaust passage, the resulting finely divided solution becomes evaporated in contact with the hot exhaust gases so that ammonia is formed. The mixture of ammonia and exhaust gases is then led through an SCR catalyst in which the nitrogen in the nitrogen oxides in the exhaust gases reacts with the nitrogen in the ammonia to form nitrogen gas. The oxygen in the nitrogen oxides reacts with the hydrogen in the ammonia to form water. The nitrogen oxides in the exhaust gases are thus reduced in the catalyst to nitrogen gas and water vapor. With correct dosage of urea solution, the emissions of nitrogen oxides can be greatly reduced.

The urea solution can be supplied to the exhaust gases by means of an injection unit which injects the urea solution in finely divided form to an inner space of an exhaust line. However, the temperature of the exhaust gases decreases with the distance from the combustion engine. A high exhaust gas temperature accelerates the evaporation process of the urea solution and favors the reduction of nitrogen oxides in the exhaust gases. In an exhaust passage with a turbine of a turbocharger, the most favorable position of the injection unit is immediately downstream of the turbine. However, in this position, the injection unit is exposed to very high exhaust temperatures and vibrations from the combustion engine. Due to this fact, it is common to mount the injection unit in a more protected position in the exhaust line. The injection unit may, for example, be applied in a silencer which may be arranged at a relatively long distance from the combustion engine and the turbine.

WO 2005/005799 shows a device for metering reducing agent to the exhaust gases of a combustion engine. The device comprises an injector to which reducing agent is supplied by a pump from a reservoir. The injector has a sealing seat and a moving plunger that, when lifting from the sealing seat, enables a flow of reducing agent to the exhaust gas. The plunger is lifted from the sealing seat by a pressure of the reducing agent against the action of a spring.

US2007/0228191 discloses a fluid-injecting system, comprising a nozzle assembly, including a housing defining an outlet cooling passage, an outlet control passage, at least one inlet supply passageway, and an injection orifice; a shaft disposed within the housing and movable between a closed position at which fluid is prevented from exiting via the orifice and an open position at which fluid passes through the orifice; a first valve in fluid communication with the nozzle assembly to regulate the supply of a fluid though the at least one inlet supply passageway; and a second valve in fluid communication with the nozzle assembly to regulate a flow of fluid through the outlet control passageway.

### SUMMARY OF THE INVENTION

The object of the present invention is to provide an injection arrangement comprising an injection unit having a simple and robust design such that it can be arranged in a position in which it is exposed to extreme temperatures and vibrations at the same time as sensible components of the injection arrangement can be arranged at a distance from the injection unit.

This object is achieved by the device defined in the characterizing part of claim 1. The injection unit comprises a housing with an orifice and a piston dividing an inner space of the housing in a first chamber and a second chamber. Such an injection unit comprises very few including parts. Said parts can be given a very robust design making it is possible to arrange the injection unit very close to combustion engine. The pressure drop in the flow channel between the first chamber and the second chamber results in different pressures in the first chamber and the second chamber. The pressure ratio between the first chamber and the second chamber and the movement of the piston member is controlled in a simple manner by a valve member in the return line. When the valve member is in an open position, a pressure ratio is created between the first chamber and the second chamber at which the piston member is moved to a first position in which it prevent injection of the reducing agent. When the valve member is in a closed position, a pressure ratio is created between the first chamber and the second chamber at which the piston member is moved to a second position in which it allows injection of the reducing agent. The valve member can be arranged in a suitable position of a return line at a distance from the injection unit where it is not exposed to high temperatures from the exhaust gases and vibrations from the combustion engine. The above mentioned design makes it possible to inject the reducing agent into the exhaust passage in a position where the exhaust gases substantially always has a high temperature at the same time as more sensible components such as the valve member can be arranged in a more protected position . The high temperature of the exhaust gases accelerates the vaporization process of the reducing agent and increases the capacity to reduce the emissions of nitrogen oxides in the exhaust gases.

According to an embodiment of the invention, the injection arrangement comprises at least two flow channels allowing a reducing agent flow with a specific pressure drop between the first chamber and the second chamber. When reducing agent not is injected, the main part of the reducing agent flow entering the first chamber is directed to the return line. However, a small part of the reducing agent flow entering the first chamber will be directed into the second chamber via one of said flow channels and directed back to the first chamber via the other flow channel. This reducing agent flow ensures that the second chamber continuously receives fresh reducing agent of a relatively low temperature cooling the components of the injection unit. Furthermore, this flow prevents accumulation of reducing agent at a very high temperature in the second chamber.

According to an embodiment of the invention, said at least one flow channel extends through the piston. Such a flow channel may have a very simple design. The cross sectional area of the flow channel may define pressure drop for the reducing agent when it flows between the first chamber and the second chamber.

According to an embodiment of the invention, the piston member comprises a first area in contact with the reducing agent in the first chamber and a second area in contact with the reducing agent in the second chamber, wherein the second area is larger than the first area. The product of the pressure in the first chamber and the first area defines a force acting on the piston which tends to move the piston to the first position. The product of the pressure in the second chamber and the second area defines a force acting on the piston, which tends to move the piston to the second position. When the valve member is in an open position, the pressure in the second chamber will be considerable lower than the pressure in the first chamber. When the valve member is in a closed position, the pressure in the second chamber will be somewhat lower than the pressure in the first chamber. Since the pressure in the second chamber never is higher than in the first chamber, the second area has to be larger than the first area in order to provide a movement of the piston member to the second position.

According to an embodiment of the invention, the orifice is designed such that the reducing agent receives a larger pressure drop when it flow through the orifice than when it flows from said flow channel between the first chamber and the second chamber. The larger pressure drop in the orifice maintains the pressure in the second chamber such that the piston member not will be moved from the second position to the first position during in injecting process of the reducing agent in the exhaust gases.

According to an embodiment of the invention, the housing comprises a first housing portion comprising the orifice and a second housing portion and that said housing portions in a connected state form an inner space for the piston member. In order to make it possible to introduce the piston member in a substantially closed inner space a housing, the housing may include two housing portions, which in a connected encloses the piston in an inner space. The second housing portion may be annular. In this case, the second housing portion may have an outer periphery arranged in contact with an inner surface of the first housing portion. The central hole of the second housing portion may form a support for a portion of the piston member.

According to an embodiment of the invention, the second housing portion may comprise an inlet channel through which reducing agent is directed from the inlet line to the first chamber and a return channel through which reducing agent is directed from the first channel to the return line. Such a design of the second housing portion makes it easy to connect an inlet line and an outlet line to the first chamber. The second housing portion may comprise a rear portion of the housing and the first housing portion may comprise a front portion of the housing including the orifice.

According to an embodiment of the invention, the piston member comprises a front portion configured to close the orifice in the first position and expose the orifice in the second position. The front portion of the piston member may have a corresponding shape as the orifice. In this case, the injection arrangement does not need to be provided with a specific component above the piston member for closing and opening of the orifice.

According to an embodiment of the invention, the piston member comprises a piston portion dividing the first chamber from the second chamber. The piston portion has the largest diameter of the piston member. An outer periphery surface of the piston portion may be slidably connected to an inner surface of the housing. The piston member may comprise a shaft portion to be in slidable contact with the housing. The shaft portion and the housing may define a path of movement of the piston member.

According to an embodiment of the invention, the valve member is a solenoid valve. Such a valve member can be switched very quickly between an open position and a closed position. Such properties of the valve member facilitate the dosing of the reducing agent. The valve member may be controlled by a control unit. The control unit may receive information about parameters such as the temperature and the flow rate of exhaust gases in the exhaust line. In view of this information, the control unit may determine if reducing agent is to be injected or not. Furthermore, it may calculate a suitable dose of the reducing agent to be injected into the exhaust gases. The control unit may control the valve member and the injection of the reducing agent into the exhaust gases by means of this information. The control unit may also control the pump in order to provide a suitable reducing agent flow rate to the first chamber.

According to an embodiment of the invention, the injection arrangement comprises a tank from which reducing agent is directed to the first chamber via the inlet line and to which reducing agent is returned from the first chamber, via the return line, when the valve member is in an open position. Consequently, there is a continuously reducing agent flow to and from the tank when the valve member is in an open position and no reducing agent is injected into the exhaust gases.

According to an embodiment of the invention, the reducing agent is a urea solution. When the urea solution is injected into the exhaust passage, it becomes evaporated in contact with the hot exhaust gases so that ammonia is formed. The mixture of ammonia and exhaust gases is led to an SCR catalyst in which nitrogen oxides in the exhaust gases are reduced. A correct dosage of the urea solution results in an effective reduction of nitrogen oxides in the exhaust gases.

### BRIEF DESCRIPTION OF THE DRAWINGS

In the following a preferred embodiment of the invention is described with reference to the attached drawings, on which:
- Fig. 1: shows an exhaust gas passage of a combustion engine including an injection arrangement according to the invention,
- Fig. 2: shows a longitudinal sectional view of the injection unit in Fig. 1 in a no injecting position,
- Fig. 3: shows a longitudinal sectional view of the injection unit in Fig. 1 in an injecting position,
- Fig. 4: shows a transverse cross sectional view along plane A-A in Fig. 2 and
- Fig. 5: shows a transverse cross sectional view along plane B-B in Fig. 2.

### DETAILED DESCRIPTION OF A PREFERED EMBODIMENT OF THE INVENTION

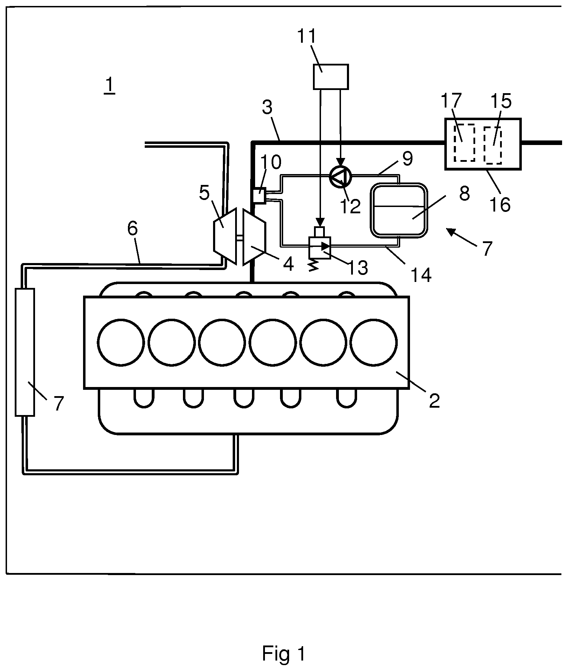

Fig. 1 shows schematically a vehicle 1 driven by a combustion engine 2 which may be a diesel engine. The vehicle 1 can be a heavy vehicle. Exhaust gases from the cylinders of the combustion engine 2 are directed to an exhaust line 3. A turbine 4 of a turbocharger is arranged in the exhaust passage 3. The turbocharger also comprises a compressor 5 compressing charge air to be directed, via an air passage 6, to the combustion engine 1. The air passage 6 comprises a charged air cooler 7 cooling the charge air before it enters the combustion engine 2. The exhaust passage 3 is provided with a SCR (Selective Catalytic Reduction) system for reducing emissions of nitrogen oxides in the exhaust gases. The SCR system includes an injection arrangement injecting a reducing agent in the form of a urea solution in a specific dose to the exhaust gases in the exhaust passage 3.

The injection arrangement comprises a tank 8 in which the urea solution is stored. The urea solution is directed, via an inlet line 9, to an injection unit 10 injecting the urea solution into the exhaust gases. The injection unit 10 injects urea solution in the exhaust passage 3 in a position substantially immediately downstream of the turbine 4. A control unit 11 controls the supply of urea solution from the tank 8 to the injection unit 10 by means of a pump 12. The control unit 11 controls the injection of the urea solution by means of a solenoid valve 13. The solenoid valve 13 is arranged in a return line 14. The return line 14 returns unused urea solution from the injection unit 10 to the tank 8. The control unit 11 may be a computer unit provided with a suitable software for the control of the pump 8 and the solenoid valve 13. The control unit 11 may receive information about a number of operating parameters whereupon it calculates the amount of urea solution to be supplied to the exhaust gases at which the emissions of nitrogen oxides in the exhaust gases are reduced in an optimal manner. Since the injection unit 10 is arranged close to the turbine 4, it is exposed for exhaust gases of high temperatures and vibrations from the combustion engine 2. The control unit 11, the pump 12, the solenoid valve 13 and the tank 8 are arranged at a distance from the injection unit 10 in more protected positions.

The SCR system comprises a SCR-catalyst 15. In this case, the SCR catalyst 15 is arranged in a silencer 16 in the exhaust passage 3. The silencer 16 also contains a schematically indicated particulate filter 17. The exhaust passage 3 may also contain other exhaust treatment components such as an oxidation catalyst and an ammoniac slip catalyst. The injected urea solution is heated by the exhaust gases to a temperature at which it evaporates. The evaporated urea solution is converted to ammonia which enters the SCR-catalyst 15. In the SCR-catalyst 15, the nitrogen in the ammonia reacts chemically with the nitrogen in the nitrogen oxides such that nitrogen gas is formed. The hydrogen in the ammonia reacts chemically with the oxygen in the nitrogen oxides such that water is formed. Thus, the nitrogen oxides in the exhaust gases are reduced in the SCR-catalyst 15 to nitrogen gas and water vapor.

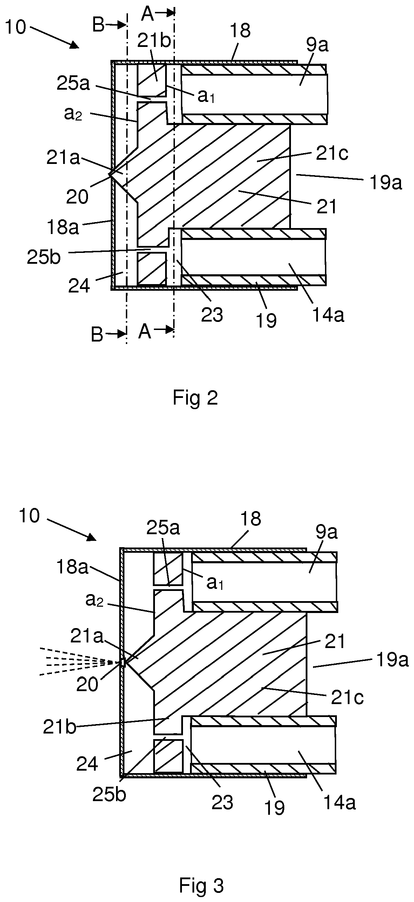

Fig. 2 and 3 show a longitudinal cross sectional view of the injection unit 10. The injection unit 10 comprises a housing including a first housing portion 18 and a second housing portion 19. The first housing portion 18 comprises a front wall 18a comprising an orifice 20 for injection of urea solution in the exhaust gases in the exhaust passage 3. The second housing portion19 is annular. The second housing portion 19 has an outer periphery surface to be fixedly connected to an inner surface of the first housing portion 18. The second housing portion 19 comprises an inlet channel 9a defining a part of the inlet line 9 and a return channel 14a defining a part of the return line 14. The injection unit 10 comprises a piston member 21 movably arranged in the housing 18, 19 between a first position and a second position.

The piston member 21 comprises a front portion 21a. Fig. 2 shows the piston member 21 in the first position. The front portion 21a has a conical design with a protruding portion to be introduced into the orifice 20 in the first position. Thus, no urea solution is injected into the exhaust gases when the piston member 21 is in the first position. Fig. 3 shows the piston member 21 in the second position. In the second position, the protruding portion of the front portion 21a has been moved out of the orifice 20 such that it is exposed. Thus, urea solution can injected into the exhaust gases when the piston member 21 is in the second position. The piston member 21 comprises a piston portion 21b dividing an inner space of the housing 18, 19 in a first chamber 23 and a second chamber 24. The piston portion 21b comprises an outer periphery surface slidingly arranged in contact with an inner surface of the first housing portion18. The piston member 21 comprises a shaft portion 21c having a smaller diameter than the piston portion 21b. The shaft portion 21c is slidably arranged in in contact with an inner periphery surface defining a center hole 19a of the annular second housing portion 19.

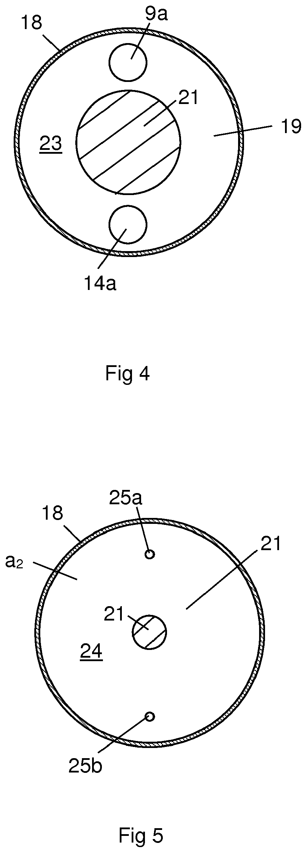

The piston portion 21b comprises on one side a first piston area a₁ to be in contact with the urea solution in the first chamber 23 and on an opposite second side a second piston area a₂ to be in contact with the urea solution in the second chamber 24. The piston portion 21b comprises a first flow channel 25a extending between the first chamber 23 and the second chamber 24. The first flow channel 25a has an opening to the first chamber 23 located close to the inlet channel 9a in the second housing portion 19 delivering urea solution to the first chamber 23. The piston portion 21b comprises a second flow channel 25b extending between the first chamber 23 and the second chamber 24. The second flow channel 25b has an opening to the first chamber 23 located close to the return channel 14a in the second housing portion 19 receiving urea solution to the first chamber 23. The flow channels 25a, 25b are designed such that the urea solution receives a predetermined pressure drop when it flows between the first chamber 23 and the second chamber 24. Fig. 4 shows a cross sectional view through the first chamber 23 and Fig. 5 shows a cross sectional view through the second chamber 24.

During operation of the vehicle, the control unit 11 controls the pump 12 such that it pumps a suitable amount of urea solution from the tank 8, via the inlet line 9, to the first chamber 23. During operation condition when no urea solution is to be injected into the exhaust gases, the control unit 11 sets the solenoid valve 13 in an open position. Due to the pressure drop in the first flow channel 25a, the second chamber 24 receives urea solution with a second pressure p₂ which is lower than the first pressure p₁ in the first chamber 23. The first area a₁ of the piston 21 which is in contact with the urea solution in the first chamber 23 is smaller than the second area a₂ of the piston 21 which is in contact with the urea solution in the second chamber 24. The first pressure p₁ and the second pressure p₂ may be in the pressure range of 0-5 bar.

A first force F₁=p₁∗a₁ acts on the piston member 21 in order to move it towards the first position. A second force F₂=p₂∗a₂ acts on the piston member 21 in order to move it in an opposite direction to the second position. The pressure drop in the flow channel 25a is dimensioned such that the ratio between the first pressure p₁ in the first chamber 26 and the second pressure p₂ in the second chamber 24 are larger than the ratio between the second area a₂ and the first area a₁. Consequently, the first force F₁ is larger than the second force F₂ when the solenoid valve 13 is in an open position. Consequently, the piston member 21 is moved to the first position in which the protruding portion closes the orifice 20. Consequently, no urea solution is injected into the exhaust gases in the exhaust passage 3. The main part of the urea flow to the first chamber 23 is immediately returned, via the return line 14, to the tank 8. A small urea flow is directed from the first chamber 23, via the first flow channel 25a, to the second chamber 24 and back again to the first chamber 23, via the second flow channel 25b, before it is returned to the tank 8. This small urea flow provides a cooling of the including components of the injection unit 10 namely the first housing portion 18, the second housing portion 19 and the piston member 21. Furthermore, it prevents accommodation of urea solution of a high temperature in the second chamber 24.

During operation condition when urea solution is to be injected into the exhaust gases, the control unit 11 sets the solenoid valve 13 in a closed position. Consequently, the urea flow from the first chamber 23, via the return line 14, to the tank 8 is stopped. In this case, the urea solution is forced from the first chamber 23, via the flow channels 25a, 25b, to the second chamber 24 and out via the orifice 20. Consequently, the second pressure p₂ of the urea solution in the second chamber 24 will be only slightly lower than the first pressure p₁ in the first chamber 25. The above mentioned pressure drops and the areas a₁, a₂ are dimensioned such that the second force F₂ will be larger than the first force F₁. Consequently, the piston member 21 is moved to the second position when the solenoid valve 13 is in the closed position. In the second position urea solution is pressed out from the second chamber 24, via the orifice 20, to the exhaust gases in the exhaust passage 3. The orifice 20 is dimensioned such that the pressure drop of the urea solution when it flows out through the orifice 20 is larger than the pressure drop of the urea solution when it flows through the flow channels 25a, 25b between the first chamber 26 and the second chamber 24. The pressure drop in the orifice 20 is necessary in order to maintain the second pressure p₂ in the second chamber 24. In other case, the piston member 21 will be moved from the second position during the injection process.

The injection unit 10 has a very simple and robust design with only three including components namely a first housing portion 18, a second housing portion 19 and a piston member 21. All three components of the injection unit 10 are made of materials which are resistant to high temperatures. The components can, for example, be manufactured of suitable metal materials. The robust design of the injection unit 10 makes it also resistant to vibrations. Consequently, it is possible to arrange the injection unit 10 substantially immediately downstream of the turbine 4 in the exhaust passage 3. The temperature of the exhaust gases are usually always high in this position which facilitate the evaporation process of the urea solution and it increases, for example, the capacity of the SCR-catalyst 15 to reduce nitrogen oxides in the exhaust gases relatively soon after a cold start. Sensible components such as the control unit 11, the pump 12, and the solenoid valve 13 can be arranged at a suitable distance from the injection unit 10 in a more protected position from high temperature and vibrations.

The invention is not restricted to the embodiments described on the drawing but may be varied freely within the frame of the claims.

## Claims

1. An injection arrangement for injection of a reducing agent into an exhaust line (3) of a combustion engine (2), wherein the injection arrangement (7) comprises an injection unit (10) comprising a housing (18, 19), a piston member (21) dividing an inner space of the housing (18) in a first chamber (23) and a second chamber (24), and an orifice (20) arranged in the second chamber (24) via which reducing agent is injected into the exhaust line (3), and wherein the injection arrangement (7) further comprises a pump (12), an inlet line (9) via which reducing agent is directed by the pump (12) to the first chamber (23), a return line (14) via which reducing agent leaves the first chamber (23),**characterized in that** the injection arrangement (7) comprises at least one flow channel (25a, 25b) allowing a reducing agent flow with a specific pressure drop between the first chamber (23) and the second chamber (24), and a valve member (13) arranged in the return line (14) which in an open position creates a first ratio between the pressures in the first chamber (23) and in the second chamber (24) at which the piston member (21) is moved to a first position in which injection of reducing agent via the orifice (20) is prevented and which in a closed position creates a second ratio between the pressures in the first chamber (23) and in the second chamber (24) at which the piston member (21) is moved to a second position in which the injection of reducing agent via the orifice (20) is allowed.

2. An injection arrangement according to claim 1, **characterized in that** it comprises at least two flow channels (25a, 25b) allowing a reducing agent flow with a specific pressure drop between the first chamber (23) and the second chamber (24).

3. An injection arrangement according to claim 1 or 2, **characterized in that** said at least one flow channel (25a, 25b) extends through the piston (21).

4. An injection arrangement according to any one of the preceding claims, **characterized in that** the piston member (21) comprises a first area (a₁) in contact with the reducing agent in the first chamber (26) and a second area (a₂) in contact with the reducing agent in the second chamber (24), wherein the second area (a₂) is larger than the first area (a₁).

5. An injection arrangement according to any one of the preceding claims, **characterized in that** the orifice (20) is designed such that the reducing agent receives a larger pressure drop when it flows out through the orifice (20) than when it flows from said at least one flow channel (25a, 25b) between the first chamber (23) and the second chamber (24).

6. An injection arrangement according to any one of the preceding claims, **characterized in that** the housing (1) comprises a first housing portion (18) comprising the orifice (20) and a second housing portion (19), and that said housing portions (18, 19) form an inner space for the piston member (21) in a connected state.

7. An injection arrangement according to claim 6, **characterized in that** the second housing portion (19) is annular.

8. An injection arrangement according to claim 6 or 7, **characterized in that** the second housing portion (19) comprises an inlet channel (9a) through which reducing agent is directed from the inlet line (9) to the first chamber (23) and an return channel (14a) through which reducing agent is directed from the first chamber (23) to the return line (14).

9. An injection arrangement according to any one of the preceding claims, **characterized in that** the piston member (21) comprises a front portion (21a) configured to close the orifice (20) in the first position and expose the orifice (20) in the second position.

10. An injection arrangement according to any one of the preceding claims, **characterized in that** the piston member (21) comprises a piston portion (21b) configured to divide the first chamber (23) from the second chamber (24).

11. An injection arrangement according to any one of the preceding claims, **characterized in that** the piston member (21) comprises a shaft portion (21c) to be in slidable contact with the housing (19).

12. An injection arrangement according to any one of the preceding claims, **characterized in that** the valve member is a solenoid valve (13).

13. An injection arrangement according to any one of the preceding claims, **characterized in that** the valve member (13) is controlled by a control unit (11).

14. An injection arrangement according to any one of the preceding claims, **characterized in that** the injection arrangement comprises a tank (8) from which reducing agent is directed to the first chamber (23) via the inlet line (9) and to which reducing agent is directed back to from the first chamber (23) via the return line (14) when the valve member (13) is in an open position.

15. An exhaust system comprising an injection arrangement according to any one of the preceding claims 1- 14.

## Patentansprüche

1. Einspritzanordnung zum Einspritzen eines Reduktionsmittels in eine Abgasleitung (3) eines Verbrennungsmotors (2), wobei die Einspritzanordnung (7) eine Einspritzeinheit (10) mit einem Gehäuse (18, 19), einem Kolbenelement (21), welches einen Innenraum des Gehäuses (18) in eine erste Kammer (23) und eine zweite Kammer (24) aufteilt, und einer in der zweiten Kammer (24) angeordneten Öffnung (20) aufweist, durch die Reduktionsmittel in die Abgasleitung (3) eingespritzt wird, und wobei die Einspritzanordnung (7) ferner eine Pumpe (12), eine Einlassleitung (9), durch die Reduktionsmittel von der Pumpe (12) zur ersten Kammer (23) geleitet wird, und eine Rücklaufleitung (14) aufweist, durch die Reduktionsmittel die erste Kammer (23) verlässt, **dadurch gekennzeichnet, dass** die Einspritzanordnung (7) zumindest einen Strömungskanal (25a, 25b), welcher einen Reduktionsmittelstrom zwischen der ersten Kammer (23) und der zweiten Kammer (24) mit einem bestimmten Druckabfall ermöglicht, und ein in der Rücklaufleitung (14) angeordnetes Ventilelement (13) aufweist, das in einer Offenstellung ein erstes Verhältnis zwischen den Drücken in der ersten Kammer (23) und in der zweiten Kammer (24) erzeugt, bei dem das Kolbenelement (21) in eine erste Stellung verschoben wird, in der ein Einspritzen von Reduktionsmittel durch die Öffnung (20) verhindert ist, und das in einer Schließstellung ein zweites Verhältnis zwischen den Drücken in der ersten Kammer (23) und in der zweiten Kammer (24) erzeugt, bei dem das Kolbenelement (21) in eine zweite Stellung verschoben wird, in der das Einspritzen von Reduktionsmittel durch die Öffnung (20) zugelassen wird.

2. Einspritzanordnung nach Anspruch 1,
**dadurch gekennzeichnet, dass** sie zumindest zwei Strömungskanäle (25a, 25b) aufweist, welche einen Reduktionsmittelstrom zwischen der ersten Kammer (23) und der zweiten Kammer (24) mit einem bestimmten Druckabfall ermöglichen.

3. Einspritzanordnung nach Anspruch 1 oder 2,
**dadurch gekennzeichnet, dass** der zumindest eine Strömungskanal (25a, 25b) durch den Kolben (21) verläuft.

4. Einspritzanordnung nach einem der vorhergehenden Ansprüche,
**dadurch gekennzeichnet, dass** das Kolbenelement (21) eine erste Fläche (a₁) in Kontakt mit dem Reduktionsmittel in der ersten Kammer (23) und eine zweite Fläche (a₂) in Kontakt mit dem Reduktionsmittel in der zweiten Kammer (24) aufweist, wobei die zweite Fläche (a₂) größer ist als die erste Fläche (a₁).

5. Einspritzanordnung nach einem der vorhergehenden Ansprüche,
**dadurch gekennzeichnet, dass** die Öffnung (20) solchermaßen konstruiert ist, dass das Reduktionsmittel einem größeren Druckabfall unterliegt, wenn es durch die Öffnung (20) ausströmt als wenn es aus dem zumindest einen Strömungskanal (25a, 25b) zwischen der ersten Kammer (23) und der zweiten Kammer (24) ausströmt.

6. Einspritzanordnung nach einem der vorhergehenden Ansprüche,
**dadurch gekennzeichnet, dass** das Gehäuse (1) einen ersten Gehäuseteil (18) mit der Öffnung (20) und einen zweiten Gehäuseteil (19) umfasst, und dass die Gehäuseteile (18, 19) in einem verbundenen Zustand einen Innenraum für das Kolbenelement (21) bilden.

7. Einspritzanordnung nach Anspruch 6,
**dadurch gekennzeichnet, dass** der zweite Gehäuseteil (19) ringförmig ist.

8. Einspritzanordnung nach Anspruch 6 oder 7,
**dadurch gekennzeichnet, dass** der zweite Gehäuseteil (19) einen Einlasskanal (9a) aufweist, durch den Reduktionsmittel von der Einlassleitung (9) zur ersten Kammer (23) geleitet wird, und einen Rücklaufkanal (14a), durch den Reduktionsmittel aus der ersten Kammer (23) zur Rücklaufleitung (14) geleitet wird.

9. Einspritzanordnung nach einem der vorhergehenden Ansprüche,
**dadurch gekennzeichnet, dass** das Kolbenelement (21) einen vorderen Abschnitt (21a) aufweist, der dazu eingerichtet ist, in der ersten Stellung die Öffnung (20) zu verschließen und in der zweiten Stellung die Öffnung (20) freizulegen.

10. Einspritzanordnung nach einem der vorhergehenden Ansprüche,
**dadurch gekennzeichnet, dass** das Kolbenelement (21) einen Kolbenabschnitt (21b) aufweist, der dazu eingerichtet ist, die erste Kammer (23) von der zweiten Kammer (24) zu trennen.

11. Einspritzanordnung nach einem der vorhergehenden Ansprüche,
**dadurch gekennzeichnet, dass** das Kolbenelement (21) einen Schaftabschnitt (21c) zum gleitenden Kontakt mit dem Gehäuse (19) aufweist.

12. Einspritzanordnung nach einem der vorhergehenden Ansprüche,
**dadurch gekennzeichnet, dass** das Ventilelement ein Elektromagnetventil (13) ist.

13. Einspritzanordnung nach einem der vorhergehenden Ansprüche,
**dadurch gekennzeichnet, dass** das Ventilelement (13) durch eine Steuereinheit (11) gesteuert ist.

14. Einspritzanordnung nach einem der vorhergehenden Ansprüche,
**dadurch gekennzeichnet, dass** die Einspritzanordnung einen Tank (8) umfasst, aus dem Reduktionsmittel durch die Einlassleitung (9) zur ersten Kammer (23) geleitet wird und in den Reduktionsmittel aus der ersten Kammer (23) durch die Rücklaufleitung (14) zurückgeleitet wird, wenn das Ventilelement (13) in einer Offenstellung ist.

15. Abgassystem mit einer Einspritzanordnung nach einem der vorhergehenden Ansprüche 1 bis 14.

## Revendications

1. Dispositif d'injection pour l'injection d'un agent réducteur dans une ligne d'échappement (3) d'un moteur à combustion (2), dans lequel le dispositif d'injection (7) comprend une unité d'injection (10) comprenant un logement (18, 19), un élément de piston (21) divisant un espace intérieur du logement (18) dans une première chambre (23) et une deuxième chambre (24), et un orifice (20) agencé dans la deuxième chambre (24) via lequel un agent réducteur est injecté dans la ligne d'échappement (3), et dans lequel le dispositif d'injection (7) comprend en outre une pompe (12), une conduite d'entrée (9) via laquelle l'agent réducteur est dirigé par la pompe (12) vers la première chambre (23), une conduite de retour (14) par laquelle l'agent réducteur quitte la première chambre (23), **caractérisé en ce que** le dispositif d'injection (7) comprend au moins un canal d'écoulement (25a, 25b) permettant un écoulement d'agent réducteur avec une chute de pression spécifique entre la première chambre (23)) et la deuxième chambre (24) et un élément de vanne (13) agencé dans la conduite de retour (14) qui crée dans une position ouverte un premier rapport entre les pressions dans la première chambre (23) et dans la deuxième chambre (24) dans laquelle l'élément de piston (21) est déplacé dans une première position dans laquelle l'injection de l'agent réducteur via l'orifice (20) est empêchée et qui dans une position fermée crée un deuxième rapport entre les pressions dans la première chambre (23) et dans la deuxième chambre (24) dans laquelle l'élément de piston (21) est déplacé dans une deuxième position dans laquelle l'injection de l'agent réducteur via l'orifice (20) est autorisée.

2. Dispositif d'injection selon la revendication 1, **caractérisé en ce qu'**il comprend au moins deux canaux d'écoulement (25a, 25b) permettant un débit d'agent réducteur avec une chute de pression spécifique entre la première chambre (23) et la deuxième chambre (24) .

3. Dispositif d'injection selon la revendication 1 ou 2, **caractérisé en ce que** ledit au moins un canal d'écoulement (25a, 25b) s'étend à travers le piston (21).

4. Dispositif d'injection selon l'une quelconque des revendications précédentes, **caractérisé en ce que** l'élément de piston (21) comprend une première zone (a₁) en contact avec l'agent réducteur dans la première chambre (26) et dans une deuxième zone (a₂) en contact avec l'agent réducteur dans la deuxième chambre (24), dans lequel la deuxième zone (a₂) est plus grande que la première zone (a₁) .

5. Dispositif d'injection selon l'une quelconque des revendications précédentes, **caractérisé en ce que** l'orifice (20) est conçu de telle sorte que l'agent réducteur reçoit une chute de pression plus importante lorsqu'il s'écoule à travers l'orifice (20) que lorsqu'il s'écoule à partir dudit au moins un canal d'écoulement (25a, 25b) entre la première chambre (23) et la deuxième chambre (24) .

6. Dispositif d'injection selon l'une quelconque des revendications précédentes, **caractérisé en ce que** le logement (1) comprend une première partie de logement (18) comprenant l'orifice (20) et une deuxième partie de logement (19), et que ladite partie de logement (18, 19) forme un espace intérieur pour l'élément de piston (21) dans un état connecté.

7. Dispositif d'injection selon la revendication 6, **caractérisé en ce que** la deuxième partie de logement (19) est annulaire.

8. Dispositif d'injection selon la revendication 6 ou 7, **caractérisé en ce que** la deuxième partie du logement (19) comprend un canal d'admission (9a) par lequel l'agent réducteur est dirigé de la ligne d'entrée (9) vers la première chambre (23) et un canal de retour (14a) par lequel l'agent réducteur est dirigé de la première chambre (23) vers la conduite de retour (14).

9. Dispositif d'injection selon l'une quelconque des revendications précédentes, **caractérisé en ce que** l'élément de piston (21) comprend une partie avant (21a) configurée pour fermer l'orifice (20) dans la première position et exposer l'orifice (20) dans la deuxième position.

10. Dispositif d'injection selon l'une quelconque des revendications précédentes, **caractérisé en ce que** l'élément de piston (21) comprend une partie de piston (21b) configurée pour diviser la première chambre (23) de la deuxième chambre (24).

11. Dispositif d'injection selon l'une quelconque des revendications précédentes, **caractérisé en ce que** l'élément de piston (21) comprend une partie d'arbre (21c) pour être en contact coulissant avec le logement (19).

12. Dispositif d'injection selon l'une quelconque des revendications précédentes, **caractérisé en ce que** l'élément de la vanne est une électrovanne (13).

13. Dispositif d'injection selon l'une quelconque des revendications précédentes, caractérisé en que l'élément de la vanne (13) est contrôlé par une unité de commande (11).

14. Dispositif d'injection selon l'une quelconque des revendications précédentes, **caractérisé en ce que** le dispositif d'injection comprend un réservoir (8) à partir duquel l'agent réducteur est dirigé vers la première chambre (23) via la conduite d'entrée (9) et vers lequel l'agent réducteur est renvoyé vers la première chambre (23) par la conduite de retour (14) lorsque l'élément de la vanne (13) est en position ouverte.

15. Système d'échappement comprenant un dispositif d'injection selon l'une quelconque des revendications précédentes 1-14.
